# EUROPÄISCHE PATENTSCHRIFT

(11) **EP 1 165 341 B1**
(45) Veröffentlichungstag und Bekanntmachung des Hinweises auf die Patenterteilung: **05.02.2003**
(21) Anmeldenummer: 00925038.2
(22) Anmeldetag: 09.03.2000
(51) Int. Cl.: B60M 1/30

(54) **STROMSCHIENENTRÄGER**
CONDUCTOR RAIL SUPPORT
SUPPORT POUR RAILS CONDUCTEURS

(30) Priorität: 22.03.1999 DE 19912822
(43) Veröffentlichungstag der Anmeldung: 02.01.2002
(73) Patentinhaber: SIEMENS AKTIENGESELLSCHAFT, 80333 München (DE)
(72) Erfinder: UREMOVIC, Nikola, D-91052 Erlangen (DE)
(86) Internationale Anmeldenummer: DE0000736
(87) Internationale Veröffentlichungsnummer: WO00056569

(56) Entgegenhaltungen:
- DE-B- 1 051 313
- DE-B- 1 293 182
- US-A- 3 927 742
- US-A- 4 888 454

## Beschreibung

Die Erfindung betrifft einen Stromschienenträger gemäß Oberbegriff des Anspruchs 1.

Aus der DE-AS 1 293 182 ist eine Haltevorrichtung für Stromschienen bekannt, bei der Stromschienen zwischen Haltekörpern eingeklemmt und so arretiert werden. Dabei müssen Haltekörper auf zwei Schienen gleichzeitig aufgesetzt werden, ohne dass die Lage der Schienen verändert werden darf. Die Montage der Stromschienen ist daher aufwendig.

Der aus der DE-AS 1 051 313 bekannte Stromschienenträger weist einen einteilig ausgeführten Trägerkörper auf. Die Befestigung der beiden Stromschienen erfolgt jeweils durch eine auf den Schienenfuß aufsteckbare Befestigungsplatte, die nach dem Aufstecken den Schienenfuß klauenartig umfasst. Der vorgebbare Winkel der Kontakt-Schleifflächen zur Hochachse des Trägerkörpers beträgt 180°. Die Kontakt-Schleifflächen sind damit parallel zur Längsachse Trägerkörpers und parallel zur Hochachse des Trägerkörpers angeordnet.

Der aus der DE 37 19 213 C1 bekannte Stromschienenträger umfasst einen Trägerkörper zur elektrisch isolierten Aufnahme von zwei elektrisch leitfähigen Stromschienen mit jeweils einer Kontakt-Schleiffläche. Die Kontakt-Schleifflächen der beiden Stromschienen verlaufen parallel zur Längsachse des Trägerkörpers und sind nach außen ansteigend V-förmig zueinander geneigt angeordnet, wobei der von ihnen eingeschlossene Winkel etwa 90° beträgt. Die im Wesentlichen dreieckigen Stromschienen sind aufgrund ihrer korrespondierenden Formgebung mit dem Trägerkörper schraubenlos gehalten.

Weiterhin ist in der DE-OS 2 312 747 eine Tragvorrichtung für eine mehrphasige Stromabnahmestrecke beschrieben, bei der die elektrischen Leiter mittels Schrauben an der Tragvorrichtung fixiert sind.

Ferner ist aus der DE 32 43 933 C2 ein Stromschienenträger bekannt, dessen Trägerkörper an einem Stromschienenarm befestigt ist. Der Trägerkörper weist eine Aufhängeplatte aus Isoliermaterial für zwei Stromschienen auf. Die beiden Stromschienen umgreifen mit ihrem oberen Teil die Aufhängeplatte, die über einen Schraubenbolzen und Muttern mit Sicherungsblech am Stromschienenarm befestigt ist. Der Schraubenbolzen ist hierzu in eine Öffnung des Stromschienenarmes eingesetzt. Der bekannte Stromschienenträger erlaubt zwar eine Justierung der Höhenlage der Stromschienen, ist jedoch konstruktiv relativ aufwendig aufgebaut und entsprechend aufwendig zu montieren.

Aufgabe der vorliegenden Erfindung ist es, einen konstruktiv einfach aufgebauten Stromschienenträger zu schaffen, der auf einfache Weise eine isolierte Montage von zwei Stromschienen ermöglicht.

Die Aufgabe wird erfindungsgemäß durch die Merkmale des Anspruchs 1 gelöst. Vorteilhafte Ausgestaltungen der Erfindung sind jeweils Gegenstand von weiteren Ansprüchen.

Der Stromschienenträger gemäß Anspruch 1 umfasst einen Trägerkörper zur elektrisch isolierten Aufnahme von zwei elektrisch leitfähigen Stromschienen mit jeweils wenigstens einer Kontakt-Schleiffläche, wobei die Stromschienen derart in den Trägerkörper einsetzbar sind, dass die Kontakt-Schleifflächen parallel zur Längsachse des Trägerkörpers und in einem vorgebbaren Winkel oder parallel zur Hochachse des Trägerkörpers angeordnet sind.

Eine einfache Montage der beiden Stromschienen ist erfindungsgemäß dadurch möglich, dass die Stromschienen jeweils mit ihren Füßen in eine Nut des Trägerkörpers einsetzbar sind und die Stromschienen durch wenigstens ein von oben aufsteckbares Einrastelement in ihrer Betriebslage fixierbar sind.

Das Einrastelement ist sowohl in seiner oberen Endstellung als auch in seiner unteren Endstellung einrastbar, wobei die Stromschiene in der oberen Endstellung des Einrastelementes einlegbar ist und in der unteren Endstellung des Einrastelementes die Stromschiene zumindest teilweise formschlüssig und gleitend im Trägerkörper gehalten ist.

In vorteilhafter Weise ist jede Stromschiene durch ein eigenes Einrastelement fixierbar.

Die elektrisch isolierte Aufnahme der elektrisch leitfähigen Stromschiene kann im Rahmen der Erfindung entweder dadurch erfolgen, dass der Trägerkörper aus einem elektrisch isolierenden Material, vorzugsweise Kunststoff, gefertigt ist. Es ist jedoch auch möglich, dass der Trägerkörper lediglich Einlagen aus einem elektrisch isolierenden Material aufweist.

Ein Ausführungsbeispiel der Erfindung wird nachfolgend anhand der Zeichnung näher erläutert. Es zeigen:

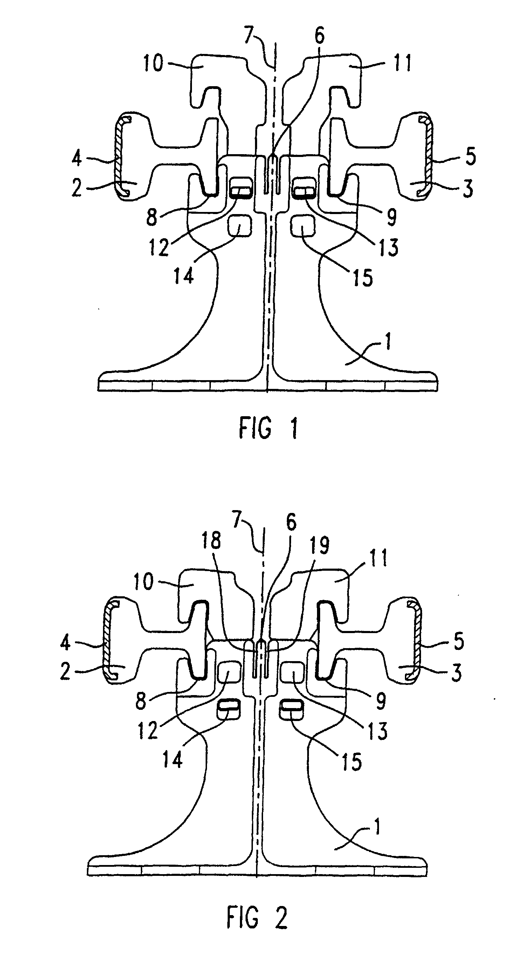

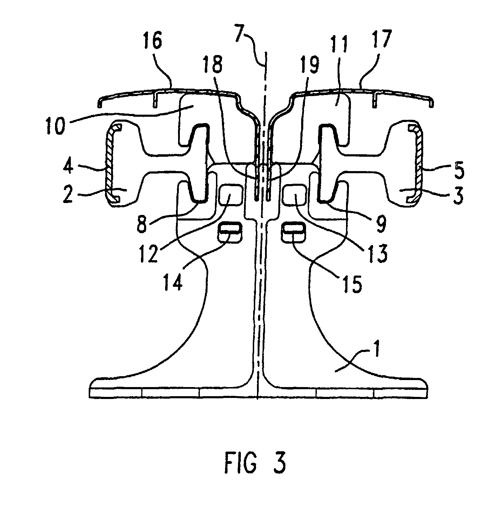

- FIG 1-3: die Montageschritte bei einem zwischen den beiden Schienen eines Gleises befestigten Trägerkörper.

In den FIG 1 bis 3 ist mit 1 ein Trägerkörper bezeichnet. Der Trägerkörper 1 dient zur elektrisch isolierten Aufnahme von zwei elektrisch leitfähigen Stromschienen 2 und 3, die jeweils eine Kontakt-Schleiffläche 4 bzw. 5 aufweisen. Die elektrisch leitfähigen Stromschienen 2 und 3 sind derart in den Trägerkörper 1 einsetzbar, daß die Kontakt-Schleifflächen 4 und 5 parallel zur Längsachse 6 des Trägerkörpers 1 und in einem vorgebbaren Winkel zur Hochachse 7 des Trägerkörpers 1 angeordnet sind. Bei der in den FIG 1 bis 3 gewählten Darstellung steht die Längsachse 6 senkrecht zur Papierebene.

Der vorgebbare Winkel zur Hochachse 7 des Trägerkörpers 1 ist im dargestellten Ausführungsbeispiel derart gewählt, daß die Kontakt-Schleifflächen 4 und 5 parallel zur Hochachse 7 des Trägerkörpers 1 angeordnet sind. Damit kann der Stromschienenträger genau mittig zwischen die beiden in der Zeichnung nicht dargestellten Schienen eines Gleises montiert werden.

Bei der in FIG 1 bis 3 dargestellten Ausführungsform des erfindungsgemäßen Stromschienenträgers sind die beiden Stromschienen 2 und 3 mit ihren Füßen in jeweils eine Nut 8 bzw. 9 des Trägerkörpers 1 einsetzbar (FIG 1). Anschließend werden die beiden Stromschienen 2 und 3 durch jeweils ein Einrastelement 10 bzw. 11 in ihrer Betriebslage fixiert (FIG 2).

Um die Montage der elektrisch leitfähigen Stromschienen 2 und 3 im Trägerkörper 1 zu vereinfachen, sind die Einrastelemente 10 und 11 sowohl in ihrer oberen Endstellung 12 bzw. 13 als auch in ihrer unteren Endstellung 14 bzw. 15 einrastbar.

In der oberen Endstellung 12 des Einrastelementes 10 ist die elektrisch leitfähige Stromschiene 2 in die Nut 8 des Trägerkörpers 1 einlegbar. Analog ist in der oberen Endstellung 13 des Einrastelementes 11 die elektrisch leitfähige Stromschiene 3 in die Nut 9 des Trägerkörpers 1 einlegbar. In der unteren Endstellung 14 des Einrastelementes 10 ist die Stromschiene 2 zumindest teilweise formschlüssig und gleitend im Trägerkörper 1 gehalten. Analog ist in der unteren Endstellung 15 des Einrastelementes 11 die Stromschiene 3 im Trägerkörper 1 gehalten.

Um eine elektrisch isolierte Aufnahme der beiden elektrisch leitfähigen Stromschienen 2 und 3 im Trägerkörper 1 zu erhalten, ist der Trägerkörper 1 aus einem elektrisch isolierendem Material, vorzugsweise Kunststoff (z. B. GFK) hergestellt.

Nach dem Einrasten der beiden Einrastelemente 10 und 11 in ihrer unteren Endstellung 14 bzw. 15 muß für beide elektrisch leitfähigen Stromschienen 2 und 3 jeweils eine Stromschienenabdeckung 16 bzw. 17 in eine jeweils als Längsschlitz ausgebildete Aufnahme 18 bzw. 19 eingesteckt werden.

Wie aus den vorstehenden Ausführungen ersichtlich, ermöglicht die in den FIG 1 bis 3 dargestellte Ausführungsform des erfindungsgemäßen Stromschienenträgers eine besonders einfache und damit auch schnelle Montage der elektrisch leitfähigen Stromschienen 2 und 3 im Trägerkörper 1.

## Patentansprüche

1. Stromschienenträger, der einen Trägerkörper (1) zur elektrisch isolierten Aufnahme von zwei elektrisch leitfähigen Stromschienen (2, 3) mit jeweils wenigstens einer Kontakt-Schleiffläche (4, 5) aufweist, wobei die Stromschienen (2, 3) derart mit ihren Füßen in jeweils eine Nut (8; 9) des Trägerkörpers (1) einsetzbar sind, dass die Kontakt-Schleifflächen (4, 5) parallel zur Längsachse (6) des Trägerkörpers (1) angeordnet sind, und wobei die Stromschienen (2, 3) durch ein von oben aufsteckbares Halteelement fixierbar sind,
**dadurch gekennzeichnet, dass** die Kontakt-Schleifflächen (4, 5) in einem vorgegebenen Winkel oder parallel zur Hochachse (7) des Trägerkörpers (1) angeordnet sind und dass das Halteelement ein Einrastelement (10, 11) ist, das sowohl in seiner oberen Endstellung (12; 13) als auch in seiner unteren Endstellung (14; 15) einrastbar ist, wobei in der oberen Endstellung (12; 13) die Stromschiene (2; 3) in die Nut (8; 9) einlegbar ist und in der unteren Endstellung (14; 15) die Stromschiene (2; 3) zumindest teilweise formschlüssig und gleitend im Trägerkörper (1) gehalten ist

2. Stromschienenträger nach Anspruch 1, **dadurch gekennzeichnet, dass** jede Stromschiene (2, 3) durch ein eigenes Einrastelement (10, 11) fixierbar ist.

3. Stromschienenträger nach Anspruch 1, **dadurch gekennzeichnet, dass** der Trägerkörper (1) aus einem elektrisch isolierenden Material, vorzugsweise Kunststoff, besteht.

4. Stromschienenträger nach Anspruch 1, **dadurch gekennzeichnet, dass** wenigstens eine Aufnahme (18; 19) für wenigstens eine Stromschienenabdeckung (16; 17) vorgesehen ist.

## Claims

1. Live rail support, which has a support body (1) for holding, such that they are electrically isolated, two electrically conductive live rails (2, 3) each having at least one contact sliding surface (4, 5), in which case the feet of the live rails (2, 3) can be inserted into a respective groove (8; 9) in the support body (1) in such a manner that the contact sliding surfaces (4, 5) are arranged parallel to the longitudinal axis (6) of the support body (1), and in which case the live rails (2, 3) can be fixed by means of a holding element which can be plugged on from above, **characterized in that** the contact sliding surfaces (4, 5) are arranged at a predetermined angle to, or parallel to, the vertical axis (7) of the support body (1), and **in that** the holding element is a latching-in element (10, 11) which can be latched in both in its upper limit position (12; 13) and in its lower limit position (14; 15), in which case, in the upper limit position (12; 13), the live rail (2; 3) can be inserted into the groove (8; 9) and, in the lower limit position (14; 15), the live rail (2; 3) is at least partially held in a positively locking manner and sliding in the support body (1).

2. Live rail support according to Claim 1, **characterized in that** each live rail (2, 3) can be fixed by means of its own latching-in element (10, 11).

3. Live rail support according to Claim 1, **characterized in that** the support body (1) is composed of an electrically insulating material, preferably plastic.

4. Live rail support according to Claim 1, **characterized in that** at least one holder (18; 19) is provided for at least one live rail cover (16; 17).

## Revendications

1. Support pour rails conducteurs, qui comporte un corps (1) porteur pour recevoir en isolation électrique deux rails (2, 3) électriquement conducteurs possédant chacun au moins une surface (4, 5) de contact frottant, les rails (2, 3) conducteurs pouvant être insérés par leurs patins dans une rainure (8 ; 9) respective du corps (1) porteur de telle sorte que les surfaces (4, 5) de contact frottant sont disposées parallèlement à l'axe (6) longitudinal du corps (1) porteur, et les rails (2, 3) conducteurs pouvant être immobilisés par un élément de maintien pouvant être emboîté par le haut,
**caractérisé en ce que** les surfaces (4, 5) de contact frottant sont disposées sous un angle prescrit par rapport à l'axe (7) normal du corps (1) porteur ou parallèlement à cet axe, et **en ce que** l'élément de maintien est un élément (10, 11) d'encliquetage qui peut être encliqueté aussi bien dans sa position (12 ; 13) finale supérieure que dans sa position (14 ; 15) finale inférieure, la position (12 ; 13) finale supérieure permettant d'insérer le rail (2, 3) conducteur dans la rainure (8 ; 9), tandis que, dans la position (14 ; 15) finale inférieure, le rail (2, 3) conducteur est maintenu au moins partiellement à complémentarité de forme et à coulissement dans le corps (1) porteur.

2. Support pour rails conducteurs suivant la revendication 1, **caractérisé en ce que** chaque rail (2, 3) conducteur peut être immobilisé par un propre élément (10, 11) d'encliquetage.

3. Support pour rails conducteurs suivant la revendication 1, **caractérisé en ce que** le corps (1) porteur est réalisé en un matériau électriquement isolant, de préférence en matière plastique.

4. Support pour rails conducteurs suivant la revendication 1, **caractérisé en ce qu'**il est prévu au moins un élément (18 ; 19) récepteur pour au moins un recouvrement (16 ; 17) de rail conducteur.
